# EUROPÄISCHE PATENTSCHRIFT

(11) **EP 1 616 722 B1**
(45) Veröffentlichungstag und Bekanntmachung des Hinweises auf die Patenterteilung: **21.12.2011**
(21) Anmeldenummer: 05015046.5
(22) Anmeldetag: 12.07.2005
(51) Int. Cl.: B60C 23/04

(54) **Verfahren und System zur Positionserkennung von Radmodulen an einem Kraftfahrzeug**
Method and system for detecting the positions of wheel-based monitors in a vehicle
Procédé et système pour déterminer la position des roues dans un système de surveillance de pression des pneumatiques

(30) Priorität: 13.07.2004 DE 102004033732
(43) Veröffentlichungstag der Anmeldung: 18.01.2006
(73) Patentinhaber: GM Global Technology Operations LLC, Detroit, MI 48265-3000 (US)
(72) Erfinder: Fries, Hermann, 55239 Gau Odernheim (DE); Lassrich, Ingobert, 65468 Trebur (DE)
(74) Vertreter: Daniel, Ulrich W.P.

(56) Entgegenhaltungen:
- DE-A1- 10 243 913
- US-A1- 2004 044 450
- US-A1- 2004 083 034
- US-B1- 6 259 361
- US-B1- 6 725 712

## Beschreibung

Die Erfindung bezieht sich auf ein Verfahren zur Positionserkennung von Radmodulen an einem Kraftfahrzeug, bei dem die Radmodule physikalische Zustandsgrößen an den Rädern erfassen und diese um eine Modulidentifikation ergänzt an eine fahrzeugbasierte Empfangs- und Verarbeitungseinrichtung signalisieren, an der aus einer Drehrichtung der Räder und/oder einer Funkfeldstärke der Signale eine Zuordnung einzelner Module zu rechten bzw. linken Rädern und eine Zuordnung einzelner Radmodule zu vorderen Rädern bzw. hinteren Rädern des Kraftfahrzeugs auf Basis modulweise erfasster Temperaturen vorgenommen wird.

Derartige Verfahren werden insbesondere in Verbindung mit einem TPMS (Tire Pressure Monitoring System; Reifendruckkontrollsystem) verwendet, das üblicherweise ein Radmodul je Rad zum Messen des aktuellen Drucks und der Temperatur im Reifen und eine Empfangs- und Verarbeitungseinrichtung zum Erfassen und Auswerten von Funksignalen der Radmodulsensoren aufweist. Von der Empfangs- und Verarbeitungseinrichtung werden Warnhinweise an den Fahrer weitergegeben oder die aktuellen Druckwerte mittels Bordcomputer angezeigt. Der gemessene Druck und die Temperatur werden durch einen in den Radmodulen integrierten Sender an die Empfangs- und Verarbeitungseinrichtung übertragen. Neben Druck und Temperatur werden auch Identifkationssignale mitübertragen, welche die Radmodule voneinander unterscheidbar machen. Einige Ausführungsformen der Verfahren können die Drehrichtung der Räder ermitteln und diese ebenfalls an die Empfangs- und Verarbeitungseinrichtung übermitteln, so dass hierdurch deren Montageseite (rechts oder links) bekannt wird.

Um dem Fahrer positionsbezogen Informationen, Hinweise oder Warnungen zu geben (z. B. Druckverlust vorne links), muss die Sensoridentifikation mit der Radposition in Zusammenhang gebracht werden. Derzeitige Reifendruckkontrollsysteme haben zur Erkennung der Sensorposition am Kraftfahrzeug an geeigneter Stelle zusätzliche Empfangsantennen oder Feldstärkedetektoren eingebaut (z. B. im Radkasten), welche der Empfangs- und Verarbeitungseinrichtung die Zuordnung von Sensoridentifikation und Sensorposition am Kraftfahrzeug (z. B. vorne links) ermöglichen.

Die zusätzliche Empfangsantenne oder der Feldstärkedetektor sind so ausgelegt, dass nur die vom zugehörigen Rad ausgehenden Sendungen empfangen bzw. detektiert werden. Die Sensorsignale der übrigen Räder werden nicht oder wesentlich schwächer erkannt. Die Auswertung wird von der Empfangs- und Verarbeitungseinrichtung durchgeführt.

Nachteilig bei der Zuhilfenahme der Sensorempfangsfeldstärke zur achsbezogenen Positionserkennung ist die spezielle Positionierung der Zentralantenne bzw. der Empfangs- und Verarbeitungseinrichtung mit integrierter Zentralantenne. Dabei muss diese so im Kraftfahrzeug angebracht sein, dass sich unterschiedlich starke Sensorempfangssignalverläufe von Vorder- und Hinterachse ergeben. Günstig ist dabei eine zu den Achsen asymmetrische Einbaulage. In vielen Kraftfahrzeugen sind diese günstigen Einbaupositionen bereits durch andere Komponenten belegt, wodurch die Reifendruckkontrolle nur unter zu Hilfenahme zusätzlicher Hardwarekomponenten zu realisieren ist.

Die US 6 725 712 B1 offenbart ein gattungsgemäßes Verfahren zur Positionserkennung von Radmodulen an einem Kraftfahrzeug, bei dem die Radmodule physikalische Zustandsgrößen an den Rädern erfassen und diese um eine Modulidentifikation ergänzt an eine fahrzeugbasierte Empfangs- und Verarbeitungseinrichtung signalisieren, an der aus einer Drehrichtung der Räder eine Zuordnung einzelner Radmodule zu rechten bzw. linken Rädern des Kraftfahrzeugs vorgenommen wird. Eine Zuordnung einzelner Radmodule zu vorderen Rädern bzw. hinteren Rädern des Kraftfahrzeugs erfolgt auf Basis modulweise erfasster Temperaturen.

Darüber hinaus beschreibt die US 6 259 361 B1 ein System zur Kontrolle des Reifendrucks mit Druck- und Temperatursensoren, wobei die Positionserkennung eines Reifens mittels dessen zugeordneter Temperatur erfolgt.

Im Weiteren zeigt die DE 102 43 913 A1 ein Verfahren zur Kontrolle des Reifendrucks in einem Kraftfahrzeug durch drahtlose Übertragung von Reifendruckdaten und Temperaturdaten von einem in einem Rad mitrotierenden Sender an einen oder mehrere im Kraftfahrzeugangeordnete Empfänger. Zur TPMS-Positionszuordnung wird der Fahrzeugzustand gemeinsam mit den fahrzustandsabhängigen individuellen Temperaturänderungen und/oder mit den fahrzustandsabhängigen Druckänderungen in den Rädern ausgewertet. Es werden Druck-/Temperaturinformationen verwendet, die sich aus einem vergleich von Rad- und/oder Druckinformationen von einzelnen Rädern mit anderen Rädern ergeben, wobei die hierzu verwendete charakteristische Größe insbesondere durch Quotienten- oder Differenzbildung von unterschiedlichen Radpaarungen erzeugt wird.

Es ist Aufgabe der Erfindung, ein Verfahren der eingangs genannten Art bereitzustellen, das eine einfache und sichere Zuordnung der Radmodule zu den Rädern eines Kraftfahrzeugs unabhängig vom Einbauort einer Empfangs- und Verarbeitungseinrichtung am Kraftfahrzeug erlaubt, keine zusätzlichen Hardwarekomponenten erfordert und kostengünstig umzusetzen ist. Ferner ist es Aufgabe der Erfindung, ein entsprechendes Positionserkennungssystem, insbesondere zum Durchführen des Verfahrens, zur Verfügung zu stellen.

In Verbindung mit dem Oberbegriff des Anspruchs 1 wird die Aufgabe verfahrensgemäß dadurch gelöst, dass eine Temperaturdifferenz vorgebbar ist, um die sich eine erfasste Temperatur vorderer Räder und/oder angetriebener Räder von hinteren Rädern und/oder nicht angetriebenen Rädern zur achsweisen Zuordnung der Radmodule unterscheiden muss.

Zunächst wird dabei die Rechts/Linkszuordnung, wie bislang üblich, mit Hilfsempfängern, wie z. B. Empfangsantennen, oder Radmodulen mit integrierter Drehrichtungserkennung, durchgeführt. Ein Auswertealgorithmus erkennt zwei Radmodule auf der linken Fahrzeugseite und zwei auf der rechten Fahrzeugseite. Diese Auswertung kann sofort bei Fahrtantritt erfolgen, d. h. mit erster Aussendung der Radmodule.

Anschließend erfolgt die Achszuordnung, die nicht über die Empfangsfeldstärke der Radmodule, sondern durch die Auswertung der Temperaturen an der Vorder- und Hinterachse erfolgt. Diese unterscheiden sich achsweise, abhängig von Vorder- und Hinterachse, oder deren Antrieb bei Fahrzeugbeschleunigung.

Diese Form der Temperaturauswertung ist wesentlich vereinfacht, weil die Positionen der Radmodule (rechts/links) bereits bekannt sind. Diese sind sofort bei Fahrantritt mit der ersten Sendung der Radmodule verfügbar. Nach Verfügbarkeit dieser Information kann anschließend eine Achszuordnung (vorn / hinten) durch Temperaturvergleich erzielt werden. Dadurch können z. B. sensorbasierte Reifendruckkontrollsysteme kostenoptimiert ohne funktionelle Einbußen in jedes Kraftfahrzeug integriert werden.

Durch die Vorgabe der Temperaturdifferenz, um die sich eine erfasste Temperatur vorderer Räder und/oder angetriebener Räder von hinteren Rädern und/oder nicht angetriebenen Rädern zur achsweisen Zuordnung der Radmodule unterscheiden muss, werden damit klare Temperaturunterschiede gefordert, wodurch Einflüsse z. B. eines spezifischen Fahrzustands, wie längere Kurvenfahrt oder einseitige Fahrzeugbeladung, ausgeschlossen werden.

In einer vorteilhaften Weiterbildung werden die modulweise erfasste Temperaturen miteinander verglichen und die Radmodule mit den höchsten erfassten Temperaturen den vorderen Rädern des Kraftfahrzeugs zugeordnet. Dabei wird der Effekt ausgenutzt, dass sich die Vorderräder in Bezug auf die Hinterachse stärker erwärmen (Brems-, und Lenkbelastung). Dieser Vergleich kann z. B. nach vorgegebener Fahrtzeit durchgeführt werden, nachdem sich die Radtemperaturen eingestellt haben, die eine sichere Zuordnung der Radmodule zu den Rädern zulassen. Da lediglich die aktuell übermittelten

Zweckmäßigerweise werden dabei die Temperaturen vorderer Räder und/oder angetriebener Räder und die Temperaturen hinterer Räder und/oder nicht angetriebener Räder achsweise gemittelt. Es muss dann z. B. lediglich eine Temperaturdifferenz zwischen gemittelten höchsten und gemittelten niedrigsten Temperaturen betrachtet werden, was einen Temperaturvergleich von jedem gegen jedes Radmodul überflüssig macht. Dies erleichtert einerseits das Verfahren und macht andererseits die Zuordnung der Radmodule sicherer.

Bei einer weiteren Ausgestaltung werden modulweise erfasste Temperaturverläufe miteinander verglichen und die Radmodule mit den höchsten Temperaturgradienten den vorderen Rädern des Kraftfahrzeugs zugeordnet. Die Betrachtung einer Temperaturhistorie ist weniger temporären Einflüssen auf die Temperaturen unterworfen und macht damit die Zuordnung einzelner Radmodule sicherer. Der Temperaturgradient einzelner erfasster Temperaturen ist insbesondere im Anfangsstadium einer Fahrt besonders ausgeprägt und gibt einfach und sicher Aufschluss darüber, welches Radmodul welchem Rad zugeordnet ist.

Vorteilhafterweise werden modulweise erfasste Temperaturverläufe miteinander verglichen und die Radmodule mit den höchsten Temperaturgradienten den angetriebenen Rädern des Kraftfahrzeugs zugeordnet, wenn eine Fahrzeugbeschleunigung vorliegt. Der Vergleich kann dann durchgeführt werden, sobald sich ein erkennbarer Temperaturgradient herausgebildet hat, also frühestens schon nach zwei erfassten Temperaturen an einem Rad. Auch eine solche Auswertung der Temperaturen stellt eine Basis für eine besonders einfache und sichere Zuordnung der Module dar.

Höchste Temperaturgradienten bei beschleunigter Fahrt lassen damit auf die Anordnung von Radmodulen an den angetriebenen Rädern und höchste Temperaturgradienten bei unbeschleunigter Fahrt auf die Anordnung an den vorderen Räder eines Kraftfahrzeugs schließen. Die Kombination beider Verfahrensschritte macht eine einfache und sichere Zuordnung der Radmodule in jedem Fahrzustand möglich. Bei vorderradgetriebenen Kraftfahrzeugen können diese Zuordnungen an der Vorderachse zusammenfallen.

Bevorzugt ist dabei eine Temperaturgradientendifferenz vorgebbar, um die sich der Temperaturgradient vorderer Räder und/oder angetriebener Räder von dem hinterer Räder und/oder nicht angetriebener Räder zur achsweisen Zuordnung der Radmodule unterscheiden muss. Es werden auch damit klare Temperaturgradientenunterschiede gefordert, wodurch Einflüsse z. B. eines spezifischen Fahrzustands, wie längere Kurvenfahrt oder einseitige Fahrzeugbeladung, ausgeschlossen werden.

Dabei werden die Temperaturgradienten vorderer Räder und/oder angetriebener Räder und die Temperaturgradienten hinterer Räder und/oder nicht angetriebener Räder des Kraftfahrzeugs achsweise gemittelt. Es muss dann z. B. lediglich eine Temperaturdifferenz zwischen gemittelten höchsten und gemittelten niedrigsten Temperaturgradienten betrachtet werden, was einen Temperaturgradientenvergleich von jedem gegen jedes Radmodul überflüssig macht. Analog der schon vorstehend beschriebenen Temperaturmittlung erleichtert dies einerseits das Verfahren und macht andererseits die Zuordnung der Radmodule sicherer.

Ein weiterer Vorteil entsteht durch eine erneute Zuordnung der Radmodule zu linken Rädern und rechten Rädern sowie zu vorderen und hinteren Rädern bei jedem Fahrtantritt. Die Zuordnung arbeitet damit autonom und kann bei jedem Fahrtantritt erneut überprüft werden. Dadurch kann der Fahrer beliebige Reifenwechsel durchführen (neue Räder, Räder vorne und hinten tauschen) ohne die neuen bzw. geänderten Radmodulpositionen in das System selbst oder in der Werkstatt einprogrammieren zu müssen.

Bevorzugt wird ein modulweise erfasster Reifendruck den einzelnen Rädern zugeordnet. Dadurch ist die Position eines nicht ordnungsgemäß befüllten Reifens, z. B. im Umfang eines fahrzeugseitigen Checks im Anfangsstadium einer Fahrt, leicht identifizierbar. Zur Messung des Luftdrucks in dem Reifen kann ein an sich bekannter Luftdruck-Sensor vorgesehen sein, der im oder am Reifen angeordnet ist, und dessen Messsignale an die Empfangs- und Verarbeitungseinrichtung übermittelt werden. In der Empfangs- und Verarbeitungseinrichtung wird das Signal erfasst und z. B. mit einem festlegbaren Mindestwert für den Luftdruck verglichen. Bei Unterschreiten eines Mindestdrucks in dem Reifen kann ein Warnsignal auf optischem und/oder akustischem Wege abgegeben werden, das den Nutzer des Kraftfahrzeugs auf diesen die Verkehrssicherheit des Kraftfahrzeugs beeinträchtigenden Umstand hinweist. Derartige Systeme haben eine hohe Messgenauigkeit, sind einfach zu realisieren und können bereits geringfügige Veränderungen des Luftdrucks in einem Reifen registrieren. Zweckmäßigerweise wird der radweise zugeordnete Reifendruck einem Nutzer angezeigt, der somit über deren Zustand informiert ist und im Bedarfsfall entsprechende Maßnahmen ergreifen kann.

Obwohl die Reifendruckkontrolle eine Hauptanwendung der Erfindung darstellt, ist diese nicht darauf beschränkt. Die den einzelnen Rädern zugeordneten Radmodule machen auch eine Zuordnung einer jeweiligen Reifen-, Bremsscheiben- bzw. Bremsbelagsabnutzung und anderer radbezogener Zustandsgrößen möglich.

Ein Positionserkennungssystem für Radmodule an einem Kraftfahrzeug zur Durchführung des zuvor erläuterten Verfahrens umfasst eine auf einer Empfangs- und Verarbeitungseinrichtung auflauffähige Software zum Vergleichen modulweise erfasster Temperaturen, und zum Zuordnen der Radmodule mit den höchsten erfassten Temperaturen zu den vorderen Rädern und/oder zu den angetriebenen Rädern bei Vorliegen einer Fahrzeugbeschleunigung. Weiterhin betreffen diese eine Software zum Vergleichen modulweise erfasster Temperaturverläufe und zum Zuordnen der Radmodule mit den höchsten erfassten Temperaturgradienten zu den vorderen Rädern und/oder zu den angetriebenen Rädern bei Vorliegen einer Fahrzeugbeschleunigung. Eine solche Software erfordert keine weiteren als die üblichen Hardwarekomponenten der Empfangs- und Verarbeitungseinrichtung, ist leicht wartbar (austauschbar, versionierbar) und damit kostengünstig.

Die Software nimmt die Zuordnung eines modulweise erfassten Reifendrucks zu den einzelnen Rädern vor und eine mit der Empfangs- und Verarbeitungseinrichtung verbundene Anzeige stellt den radweise zugeordneten Reifendruck dar. Dadurch wird eine fahrzeug- und nutzerseitige Reifendruckkontrolle möglich.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörigen Zeichnungen näher erläutert. Gleiche oder gleichwirkende Teile sind mit gleichen Bezugsziffern versehen. Es zeigt:
- Fig. 1: ein Positionserkennungssystem für Radmodule an einem Kraftfahrzeug gemäß dem Stand der Technik und
- Fig. 2: ein erfindungsgemäßes Positionserkennungssystem für Radmodule an einem Kraftfahrzeug.

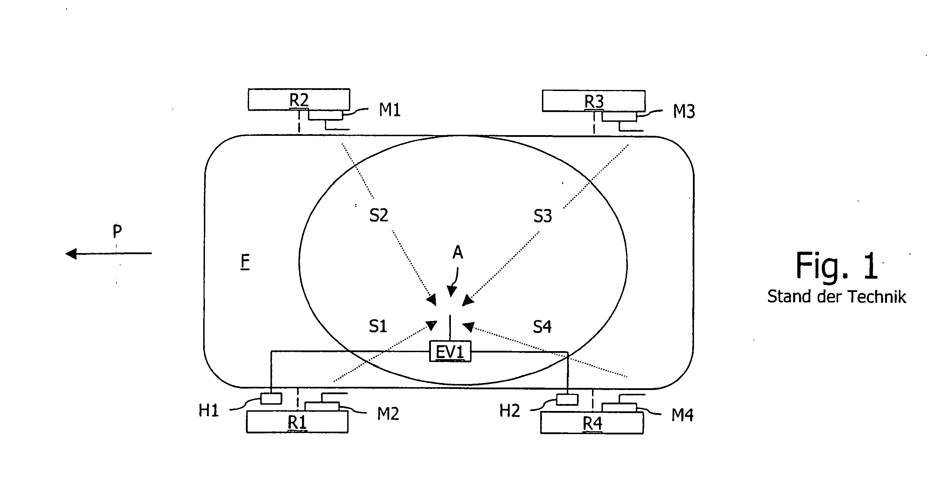

In Fig. 1 ist das Positionserkennungssystem für Radmodule M1 - M4 an einem Kraftfahrzeug F gemäß dem Stand der Technik dargestellt, an dem im Folgenden das üblicherweise implementierte Verfahren erläutert wird.

Das Positionserkennungssystem wird zur Kontrolle des Reifendrucks verwendet. Die Fahrtrichtung des Kraftfahrzeugs ist mit einem Pfeil P nach links angegeben. In jedem Rad ist ein Radmodul M1 - M4 zur Messung von Reifendruck und Reifentemperatur vorhanden. Dieses sendet die Information einschließlich seiner Sensoridentifikationsnummer an eine Empfangs- und Verarbeitungseinrichtung EV1, an welcher eine Zentralantenne A angeschlossen ist. Die Zentralantenne A ist in der Regel in die Empfangs- und Verarbeitungseinrichtung EV1 integriert. Zusätzlich sind auf der in Fahrtrichtung linken Seite je Achse ein Hilfsempfänger H1, H2 oder Feldstärkedetektor angeordnet, um Sendungen im jeweiligen Radbereich zu detektieren und zu übermitteln.

Das gleichzeitige Eintreffen des Nachrichtentelegramms und der Information, aus welchem Radkasten gesendet wurde, lässt auf die Position rechts/links schließen. Über einen speziellen Algorithmus werden anschließend die aufbereiteten Empfangsfeldstärken der Radmodule M1 - M4 miteinander verglichen. Die Empfangs- und Verarbeitungseinrichtung EV1 ist dabei derart im Kraftfahrzeug F platziert, dass eine der beiden Achsen stärkere Empfangssignale aufweist als die andere. Zum Beispiel wird die Empfangs- und Verarbeitungseinrichtung EV1 in der Nähe der Hinterachse platziert. Das Rad R3 und das Rad R4 werden nach Filterung stärkere Empfangsignale an der Empfangs- und Verarbeitungseinrichtung EV1 produzieren als das Rad R1 und das Rad R2. Mit Hilfe der beiden Informationen rechte/linke und vordere/hintere Achse ist die Zuordnung durchgeführt. Anschließende Warnungen bei Druckabfall können dem Fahrer positionsbezogen dargestellt werden.

Eine andere Ausprägung des Positionserkennungssystems (nicht dargestellt) kann darin bestehen, dass die Radmodule M1 - M4 neben Identifikationsnummer, Druck und Temperatur gleichzeitig die Drehrichtung der Räder ermitteln und übertragen. Bei gleicher Montage eines Sensors drehen sich rechtes Rad R2, R3 und linkes Rad R1, R4 genau entgegengesetzt. Unterschiedlich ist, dass hierbei keine Hilfsempfänger H1, H2 oder Feldstärkeindikatoren wie zuvor notwendig sind, um die Rechts/Links-Information zu ermitteln. Wie vorstehend beschrieben, werden die Informationen der Radmodule M1 - M4 an die Empfangs- und Verarbeitungseinrichtung EV1 übertragen, an welche die Zentralantenne A angeschlossen ist. Die Zentralantenne A ist ebenfalls in der Regel in die Steuereinheit integriert. Die Empfangs- und Verarbeitungseinrichtung EV1 kombiniert die Rechts/Links-Informationen zusammen mit der Auswertung der Empfangsfeldstärke ähnlich wie zuvor beschrieben. Auch bei einer solchen Ausführungsform der Reifendruckkontrolle muss die Steuereinheit im Kraftfahrzeug derart platziert sein, dass eine der beiden Achsen stärkere Empfangssignale aufweist als die andere.

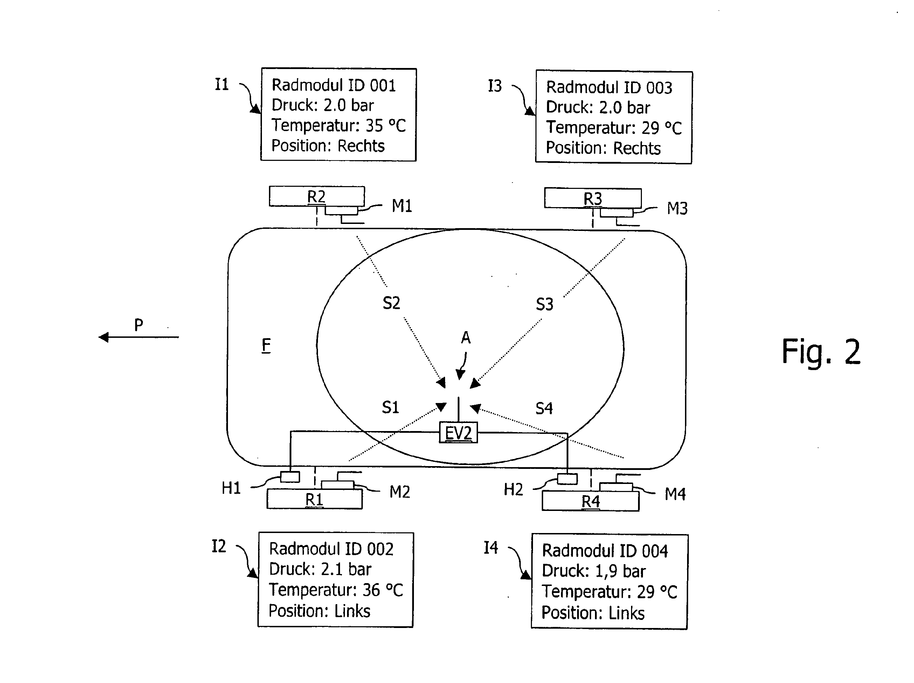

Die Fig. 2 zeigt das erfindungsgemäße Positionserkennungssystem für Radmodule M1 - M4 an einem Kraftfahrzeug F, an dem im Folgenden das erfindungsgemäß implementierte Verfahren erläutert wird.

Das Positionserkennungssystem wird ebenfalls zur Kontrolle des Reifendrucks verwendet und unterscheidet sich nur durch eine andere Empfangs- und Verarbeitungseinrichtung EV2 von dem in Fig. 1 beschriebenen. Das dargestellte Kraftfahrzeug F ist frontgetrieben und die Fahrtrichtung wiederum durch einen Pfeil P nach links angegeben. Jedes Radmodul M1 - M4 sendet Reifendruck, Reifentemperatur und mittels im Radmodul M1 - M4 integrierter Drehrichtungserkennung die Information, ob es auf der in Fahrtrichtung rechten oder linken Fahrzeugseite montiert ist. Die Sendeinformation der einzelnen Radmodule R1 - R4 ist in I1 - I4 dargestellt. Druck und Temperatur zeigen den Zustand nach einigen Minuten Fahrt. Mit der ersten Aussendung der Radmodule M1 - M4 über die Funkstrecken S1 - S4 nach Fahrtantritt liegt die Information in der Empfangs- und Verarbeitungseinrichtung EV2 vor, dass die Radmodule M1, M3 mit der Identifikationsnummer (Abkürzung ID) ID001 und ID003 auf der rechten Seite montiert sind, während die Radmodule M2, M4 mit der ID002 und ID004 sich auf der linken Seite des Kraftfahrzeugs F befinden.

Im Fahrtverlauf werden die Temperaturverläufe des rechten Pärchens (ID001, ID003) und des linken Pärchens (ID002, ID004) in der Empfangs- und Verarbeitungseinrichtung EV2 ausgewertet. Nach einiger Fahrzeit stellen sich die in I1 - I4 angegebenen Temperaturen ein. Die Radmodule ID001 (rechts) und ID002 (links) heizen sich stärker auf als ID003 und ID004. Somit sind ID001 und ID002 auf der Vorderachse angeordnet, ID003 (rechts) und ID004 (links) auf der Hinterachse. Daraus ergeben sich die Zuordnungen: ID001 befindet sich vorne rechts, ID002 befindet sich vorne links, ID003 befindet sich hinten rechts und ID004 befindet sich hinten links. Die Zuordnung ist damit abgeschlossen.

Grundsätzlich ist das vorstehend beschriebene Verfahren nicht auf die Reifenkontrolle beschränkt, sondern kann auch zur Überwachung entsprechend erfasster und den Rädern zugeordneter Verschleißwerte oder anderer Zustandsgrößen verwendet werden.

Durch das erfindungsgemäße Verfahren ist die Zentralantenne A der Empfangs- und Verarbeitungseinheit EV2 im Kraftfahrzeug F beliebig platzierbar und gleichzeitig eine einfache und sichere Zuordnung der Radmodule M1 - M4 zu den Rädern R1 - R4 zu erreichen. Eine Modifikation eines Positionserkennungssystems aus dem Stand der Technik ist lediglich hinsichtlich der Empfangs- und Verarbeitungseinrichtung EV2 notwendig, deren Software den Anforderungen des erfindungsgemäßen Verfahrens genügen muss. Dadurch entsteht zudem ein Kostenvorteil.

### Bezugszeichenliste

- A: Zentralantenne
- EV1, EV2: Empfangs- und Verarbeitungseinrichtung
- F: Kraftfahrzeug
- H1, H2: Hilfsempfänger
- I1, I2, I3, I4: Sendeinformation
- M1, M2, M3, M4: Radmodul
- R1, R2, R3, R4: Rad
- S1, S2, S3, S4: Funkstrecke
- P: Pfeil

## Patentansprüche

1. Verfahren zur Positionserkennung von Radmodulen (M1 - M4) an einem Kraftfahrzeug (F), bei dem die Radmodule (M1 -M4) physikalische Zustandsgrößen an den Rädern (R1 - R4) erfassen und diese um eine Modulidentifikation ergänzt an eine fahrzeugbasierte Empfangs- und Verarbeitungseinrichtung (EV1, EV2) signalisieren, an der aus einer Drehrichtung der Räder (R1 - R4) und/oder einer Funkfeldstärke der Signale eine Zuordnung einzelner Module (M1 - M4) zu rechten (R2, R3) bzw. linken Rädern (R1, R4) und eine Zuordnung einzelner Radmodule (M1 - M4) zu vorderen Rädern (R1, R2) bzw. hinteren Rädern (R3, R4) des Kraftfahrzeugs (F) auf Basis modulweise erfasster Temperaturen vorgenommen wird, **dadurch gekennzeichnet, dass** eine Temperatur-differenz vorgeben wird, um die sich eine erfasste Temperatur vorderer Räder (R1, R2) und/oder angetriebener Räder (R1, R2) von hinteren Rädern (R3, R4) und/oder nicht angetriebenen Rädern (R3, R4) zur achsweisen Zuordnung der Radmodule (M1 - M4) unterscheiden muss.

2. Verfahren nach Anspruch 1, **dadurch gekennzeichnet, dass** die modulweise erfassten Temperaturen miteinander verglichen und die Radmodule (M1 - M4) mit den höchsten erfassten Temperaturen den vorderen Rädern (R1, R2) des Kraftfahrzeugs (F) zugeordnet werden.

3. Verfahren nach Anspruch 1 oder 2, **dadurch gekennzeichnet, dass** die modulweise erfassten Temperaturen miteinander verglichen und die Radmodule (M1 - M4) mit den höchsten erfassten Temperaturen den angetriebenen Rädern (R1, R2) des Kraftfahrzeugs (F) zugeordnet werden, wenn eine Fahrzeugbeschleunigung vorliegt.

4. Verfahren nach Anspruch 1, **dadurch gekennzeichnet, dass** die Temperaturen vorderer Räder (R1, R2) und/oder angetriebener Räder (R1, R2) und die Temperaturen hinterer Räder (R3, R4) und/oder nicht angetriebener Räder (R3, R4) achsweise gemittelt werden.

5. Verfahren nach einem der Ansprüche 1 bis 4, **dadurch gekennzeichnet, dass** modulweise erfasste Temperaturverläufe miteinander verglichen und die Radmodule (M1 - M4) mit den höchsten Temperaturgradienten den vorderen Rädern (R1, R2) des Kraftfahrzeugs (F) zugeordnet werden.

6. Verfahren nach einem der Ansprüche 1 bis 5, **dadurch gekennzeichnet, dass** modulweise erfasste Temperaturverläufe miteinander verglichen und die Radmodule (M1 - M4) mit den höchsten Temperaturgradienten den angetriebenen Rädern (R1, R2) des Kraftfahrzeugs (F) zugeordnet werden, wenn eine Fahrzeugbeschleunigung vorliegt.

7. Verfahren nach einem der Ansprüche 1 bis 6, **dadurch gekennzeichnet, dass** eine Temperaturgradientendifferenz vorgebbar ist, um die sich der Temperaturgradient vorderer Räder (R1, R2) und/oder angetriebener Räder (R1, R2) von dem hinterer Räder (R3, R4) und/oder nicht angetriebener Räder (R3, R4) zur achsweisen Zuordnung der Radmodule (M1 - M4) unterscheiden muss.

8. Verfahren nach Anspruch 7, **dadurch gekennzeichnet, dass** die Temperaturgradienten vorderer Räder (R1, R2) und/oder angetriebener Räder (R1, R2) und die Temperaturgradienten hinterer.Räder (R3, R4) und/oder nicht angetriebener Räder (R3, R4) des Kraftfahrzeugs (F) achsweise gemittelt werden.

9. Verfahren nach einem der Ansprüche 1 bis 8, **dadurch gekennzeichnet, dass** eine Zuordnung der Radmodule (M1 - M4) zu linken Rädern (R1, R4) und rechten Rädern (R2, R3) sowie zu vorderen Rädern (R1, R2) und hinteren Rädern (R3, R4) bei jedem Fahrtantritt erneut durchgeführt wird.

10. Verfahren nach einem der Ansprüche 1 bis 9, **dadurch gekennzeichnet, dass** ein modulweise erfasster Reifendruck den einzelnen Rädern (R1 - R4) zugeordnet wird.

11. Verfahren nach Anspruch 8, **dadurch gekennzeichnet, dass** der radweise zugeordnete Reifendruck einem Nutzer angezeigt wird.

## Claims

1. A method for detecting the position of wheel modules (M1 to M4) in a motor vehicle (F), in which the wheel modules (M1 to M4) detect physical state quantities in the wheels (R1 to R4) and signal them, supplemented by module identification, to a vehicle-based receiving and processing device (EV1, EV2), in which an allocation of individual modules (M1 to M4) to the right wheels (R2, R3) or the left wheels (R1, R4) and an allocation of individual wheel modules (M1 to M4) to front wheels (R1, R2) or rear wheels (R3, R4) of the motor vehicle (F) is made on the basis of temperatures detected module by module from a direction of rotation of the wheels (R1 to R4) and/or from a radio field strength of the signals, **characterized in that** a temperature difference is predetermined by which a detected temperature of front wheels (R1, R2) and/or driven wheels (R1, R2) of rear wheels (R3, R4) and/or non-driven wheels (R3, R4) must differ for axle by axle allocation of the wheels modules (M1 to M4).

2. A method according to claim 1, **characterized in that** the temperatures detected module by module are compared with each other and the wheel modules (M1 to M4) with the highest detected temperatures are allocated to the front wheels (R1, R2) of the motor vehicle (F).

3. A method according to claim 1 or 2, **characterized in that** the temperatures detected module by module are compared and the wheels modules (M1 to M4) with the highest detected temperatures are allocated to the driven wheels (R1, R2) of the motor vehicle (F) when there is an acceleration of the vehicle.

4. A method according to claim 1, **characterized in that** the temperatures of front wheels (R1, R2) and/or driven wheels (R1, R2) and the temperatures of rear wheels (R3, R4) and/or non-driven wheels (R3, R4) are averaged axle by axle.

5. A method according to one of the claims 1 to 4, **characterized in that** temperature curves detected module by module are compared with each other and the wheel modules (M1 to M4) with the highest temperature gradients are allocated to the front wheels (R1, R2) of the motor vehicle (F).

6. A method according to one of the claims 1 to 5, **characterized in that** temperature curves detected module by module are compared with each other and the wheel modules (M1 to M4) with the highest temperature gradients are allocated to the driven wheels (R1, R2) of the motor vehicle (F) when there is an acceleration of the vehicle.

7. A method according to one of the claims 1 to 6, **characterized in that** a difference in temperature gradient can be predetermined by which the temperature gradient of front wheels (R1, R2) and/or driven wheels (R1, R2) must differ from the rear wheels (R3, R4) and/or non-driven wheels (R3, R4) for axle by axle allocation of the wheel modules (M1 to M4).

8. A method according to claim 7, **characterized in that** the temperature gradients of front wheels (R1, R2) and/or driven wheels (R1, R2) and the temperature gradients of rear wheels (R3, R4) and/or non-driven wheels (R3, R4) of the motor vehicle (F) are averaged axle by axle.

9. A method according to one of the claims 1 to 8, **characterized in that** an allocation of the wheel modules (M1 to M4) to the left wheels (R1, R4) and the right wheels (R2, R3) and to the front wheels (R1, R2) and the rear wheels (R3, R4) is performed again before each commencement of travel.

10. A method according to one of the claims 1 to 9, **characterized in that** a tire pressure detected module by module is allocated to the individual wheels (R1 to R4).

11. A method according to claim 8, **characterized in that** the tire pressure allocated wheel by wheel is displayed to a user.

## Revendications

1. Procédé de reconnaissance de position de modules de roue (M1 - M4) sur un camion (F), où les modules de roue (M1 - M4) relèvent des variables d'état physiques sur les roues (R1 - R4) qu'ils transmettent à des fins d'identification de module à un dispositif de réception et de traitement (EV1, EV2) sur lequel, à partir d'un sens de rotation des roues t/ou d'une puissance de bon hertzien des signaux, chaque module (M1 - M4) est affecté aux roues de droite (R2 - R3) et aux roues de gauche (R1 - R4) et chaque module (M1 - M4) est affecté aux roues avant (R1 - R2) et aux roues arrière (R3 - R4) du camion (F) sur la base de températures relevées au niveau des modules, **caractérisé en ce qu'**une différence de température est prédéfinie, température conformément à laquelle la température relevée des roues avant (R1, R2) et/ou des roues entraînées (R1, R2) doit diverger des roues arrière (R3, R4) et/ou des roues non entraînées (R3, R4) pour l'affectation axiale des modules de roue (M1, M4).

2. Procédé selon la revendication 1, **caractérisé en ce que** les températures relevées au niveau des modules sont comparées et les modules de roue (M1, M4) présentant les plus hautes températures relevées sont affectés aux roues avant (R1, R2) du camion (F).

3. Procédé selon la revendication 1 ou 2, **caractérisé en ce que** les températures relevées au niveau des modules sont comparées et les modules de roue (M1 - M4) présentant les plus hautes températures relevées sont affectés aux roues entraînées (R1, R2) du camion (F) lorsque le camion accélère.

4. Procédé selon la revendication 1, **caractérisé en ce qu'**une moyenne des températures des roues avant (R1, R2) et/ou des roues entraînées (R1, R2) et des températures des roues arrières (R3, R4) et/ou des roues non entraînées (R3, R4) est faite au niveau axial.

5. Procédé selon l'une des revendications 1 à 4, **caractérisé en ce que** les courbes de températures relevées au niveau des modules sont comparées et les modules de roue (M1 - M4) avec les gradients de température les plus élevés sont affectés aux roues avant (R1, R2) du camion (F).

6. Procédé selon l'une des revendications 1 à 5, **caractérisé en ce que** les températures relevées au niveau des modules sont comparées et les modules de roue (M1 - M4) avec les gradients de température les plus élevés sont affectés aux roues entraînées (R1, R2) du camion (F) lorsque le camion accélère.

7. Procédé selon l'une des revendications 1 à 6, **caractérisé en ce qu'**une différence de gradient de température peut être prédéfinie, différence de laquelle le gradient de température des roues avant (R1, R2) et/ou des roues entraînées (R1, R2) doit diverger des roues arrière (R3, R4) et/ou des roues non entraînées (R3, R4) pour une affectation axiale des modules de roue (M1 - M4).

8. Procédé selon la revendication 7, **caractérisé en ce qu'**une moyenne des gradients de température des roues avant (R1, R2) et/ou des roues entraînées (R1, R2) et des gradients de température des roues arrière (R3, R4) et/ou des roues non entraînées (R3, R4) du camion (F) est effectuée au niveau axial.

9. Procédé selon l'une des revendications 1 à 8, **caractérisé en ce qu'**une nouvelle affectation des modules de roue (M1 - M4) aux roues de gauche (R1, R4) et aux roues de droite (R2, R3) ainsi qu'aux roues avant (R1, R2) et aux roues arrière (R3, R4) est effectuée à chaque nouveau départ.

10. Procédé selon l'une des revendications 1 à 9, **caractérisé en ce qu'**une pression de pneu relevée au niveau des modules est affectée à chaque roue (R1 - R4).

11. Procédé selon la revendication 8, **caractérisé en ce que** la pression de pneu affectée aux roues est signalée à l'utilisateur.
